## Europäisches Patentamt

(19) **European Patent Office**

**Office européen des brevets**

(11) Publication number: **0 071 875**
**A1**

(12) # EUROPEAN PATENT APPLICATION

(21) Application number: **82106800.4**

(22) Date of filing: **27.07.82**

(51) Int. Cl.³: **H 01 R 35/00**

(30) Priority: **03.08.81 US 289554**

(43) Date of publication of application: **16.02.83**
**Bulletin 83/7**

(84) Designated Contracting States: **DE FR GB SE**

(71) Applicant: **LITTON SYSTEMS, INC., 1213 North Main Street, Blacksburg Virginia 24060 (US)**

(72) Inventor: **Young, James A., 820 McBryde Drive, Blacksburg Virginia 24060 (US)**

(74) Representative: **Patentanwälte TER MEER - MÜLLER - STEINMEISTER, Triftstrasse 4, D-8000 München 22 (DE)**

(54) **Limited rotation electrical coupling device.**

(57) A rotary electrical coupling device allows limited rotation between the leads (22) of a rotor shaft (16) and a stator assembly (14). The stator assembly includes a slotted cylindrical frame (26) and first and second bushings (30, 32) for rotatably supporting the rotor shaft within the frame. Each bushing has a groove (34, 36) selectively configured to engage the frame in a predetermined angular orientation and a notch (42, 44) which is selectively oriented when the bushings are engaged with the frame. A housing (54) surrounds the frame and has first and second detents (56, 58) which snap fit into the selectively oriented notches for locking the first and second bushings in engagement with the frame. The first bushing rotatably engages a channel (50) defined on the rotor shaft for preventing axial displacement of the rotor shaft relative to the stator assembly. Flat conductive tapes (20) are wound around the rotor shaft and pass through the slotted stator frame. The rotor leads are coupled to one end of the tapes on the rotor shaft and the stator leads (24) are coupled to the opposite end of the tapes between the stator frame and the stator housing.

EP 0 071 875 A1

0071875

- 2 -

## SPECIFICATION

This invention relates to limited rotation electrical coupling devices as in the preamble of claim 1.

Conventionally, rotor and stator leads may be coupled together for limited rotation in an assembly employing flat multi-conductor tape which is wrapped upon itself and allowed to coil and uncoil as conditions require. Such a coupling assembly is shown by U.S. Patent No. 3,599,165.

There is a need in the electrical coupling device art for such devices which are producible in large quantities at a relatively low cost. Prior art limited rotation devices have used structures made entirely of metal and have required expensive machining operations and separate bearing assemblies.

It is an object of the present invention to provide a relatively low cost, easily manufacturable limited rotation coupling device.

Other objects and advantages of the present invention will become apparent from the following portion of the specification and from the accompanying drawings which illustrate, in accordance with the mandate of the patent statutes, a presently preferred embodiment incorporating the principles of the invention.

Referring to the drawings:

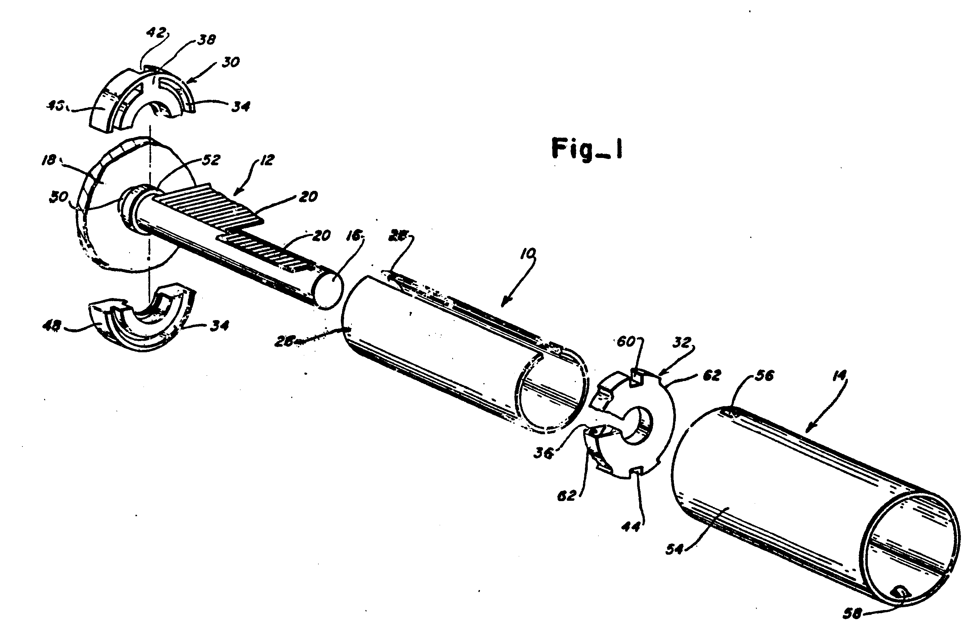

Figure 1 is an exploded perspective view of the limited rotation electrical coupling device of the present invention; and

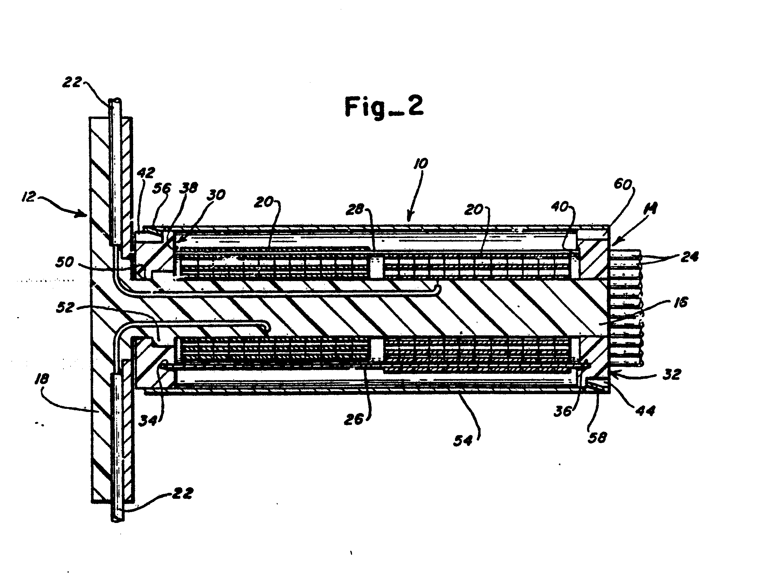

Figure 2 is a sectional view of the device of Figure 1.

The coupling device generally indicated by the reference numeral 10 includes a rotor assembly 12 and a stator assembly 14. The rotor assembly comprises an axial shaft 16 having a mounting flange 18 formed on one end and a pair of flat multi-conductor tapes 20 which are loosely spiraled in opposite directions about the shaft 16. The tapes 20 couple rotor leads 22 molded within the rotor shaft 16 to stator leads 24, permitting limited rotational displacement therebetween.

The stator assembly 14 includes a cylindrical sheet metal frame 26 which surrounds the multiconductor tapes 20. The ends of the tapes 20 pass through a slot 28 in the frame and are cemented to the exterior thereof.

First and second selectively configured bushings 30, 32, rotatably support opposite ends of the rotor shaft 16 within the frame 26. The bushings 30, 32 each have a selectively configured groove 34, 36 defining a slot engaging key portion 38, 40 for matingly engaging opposite ends of the slotted frame 26 in a predetermined angular orientation for selectively orienting notches 42, 44 defined in the bushings 30, 32. The first bushing 30 comprises semi-circular halves 46, 48 which engage a channel 50 defined on the rotor shaft 16 between the rotor flange 18 and a rotor shaft collar 52.

A cylindrical housing 54 surrounds the bushings 30, 32 and the frame 26 maintaining the halves of the first bushing 30 engaged with the rotor shaft 16. It will be appreciated that the split bushing 30 engaging the channel 50 prevents axial displacement of the rotor shaft 16 within the stator assembly 14.

The housing 54 includes first and second detents 56, 58 which snap fit into the selectively oriented notches 42, 44 in the first and second bushings 30, 32 to lock the bushings and frame in their assembled position. A cutout 60 in the second bushing 32 permits the first housing detent 56 to freely pass over the second bushing when the housing 54 is slid into its locking position.

The stator leads 24, which are electrically coupled to the tapes 20, extend outwardly from between the stator frame 26 and housing 54 through selectively defined cutouts 62 in the sides of the second bushing 32.

What is claimed is:

CLAIMS:

1. A rotary electrical coupling device for allowing limited rotation between rotor and stator leads comprises a rotor shaft (16), a stator assembly including a slotted cylindrical frame (10), first and second bushings (30, 32) for rotatably supporting the rotor shaft within the frame, and flat conductive tapes (20) wound around the rotor shaft and passing through the slotted stator frame, the rotor leads (22) being coupled to one end of the tapes on the rotor shaft, and the stator leads (24) being coupled to the opposite end of the tapes between the stator frame and the stator housing, characterized in that each bushing has a groove (34, 36) selectively configured to engage the frame in a predetermined angular orientation, each bushing has a notch (42, 44) which is selectively oriented when the bushings grooves are engaged with the frame, a housing surrounds the frame having first and second detents (56, 58) which snap fit into the selectively oriented notches for locking the first and second bushing means in engagement with the frame, and a channel (50) on the rotor shaft is engaged by the first bushing to prevent displacement of the rotor shaft relative to the stator assembly.

2. The rotary electrical coupling device according to claim 1 further characterized in that the first bushing comprises first and second semi-circular halves (46, 48) engaged with the rotor shaft channel, and the housing maintains the bushing halves engaged therein.

Fig_1

Litton Systems...
Case: PS-54   1/2

Fig_2

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A,D | US-A-3 599 165 (G.WENDELL) <br> *Column 3, lines 25-60* | 1 | H 01 R 35/00 |
|  |  |  | **TECHNICAL FIELDS SEARCHED (Int. Cl. ³)** |
|  |  |  | H 01 R 35/00 |

The present search report has been drawn up for all claims

| Place of search | Date of completion of the search | Examiner |
|---|---|---|
| THE HAGUE | 02-11-1982 | MOBOUCK G.C. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82